# EUROPEAN PATENT APPLICATION

(11) **EP 4 265 533 A1**
(43) Date of publication of application: **25.10.2023**
(21) Application number: 23167018.3
(22) Date of filing: 06.04.2023
(51) Int. Cl.: B65B 43/48, B65B 43/52, B65B 61/24, B65B 61/28, B65B 65/02, B65G 15/44, B65G 19/02, B65G 47/84, B65G 47/32, B65B 9/20, B65G 19/20

(54) **INFEED CONVEYOR FOR A FOLDING APPARATUS, FOLDING APPARATUS HAVING AN INFEED CONVEYOR AND PACKAGING MACHINE HAVING A FOLDING APPARATUS**

(30) Priority: 13.04.2022 EP 22168226
(71) Applicant: Tetra Laval Holdings & Finance S.A., 1009 Pully (CH)
(72) Inventor: MATTIOLI, Giorgio, 41123 Modena (IT); BERSELLI, Enrico, 41123 Modena (IT)
(74) Representative: Tetra Pak - Patent Attorneys SE

(57) **Abstract**

There is described an infeed conveyor (25) for a folding apparatus (11) for folding semi-finalized packs (4) containing a pourable product, the infeed conveyor (25) being configured to receive the semi-finalized packs (4) and to transfer the semi-finalized packs (4) to a folding unit (27) of the folding apparatus (11). The infeed conveyor (25) comprises a carrier (28) for the semi-finalized packs (4), a conveying device (29) for advancing the semi-finalized packs (4) on the carrier (28) and along a feeding path (R) and a control device (30) configured to control transfer of the semi-finalized packs (4) onto the carrier (28). The control device (30) comprises a support structure (32), one or more control elements (33) coupled to and protruding from the support structure (32) and a drive assembly (34) configured to advance the one or more control elements (33) along a conveying path (S) by driving the support structure (32). The control device (30) further comprises an actuation assembly (35) configured to selectively control a relative position of each control element (33) with respect to the support structure (32).

## Description

### TECHNICAL FIELD

The present invention relates to an infeed conveyor for a folding apparatus for folding semi-finalized packs of a pourable product, in particular a pourable food product.

Advantageously, the present invention also relates to a folding apparatus for folding semi-finalized packs of a pourable product, in particular a pourable food product, into finalized packages of the pourable product, in particular the pourable food product, and having an infeed conveyor.

Furthermore, the present invention also relates to a packaging machine for packaging a pourable product, in particular a pourable food product, into finalized packages and having a folding apparatus being provided with an infeed conveyor.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines.

There are known packaging machines, which advance a web of packaging material through a sterilization apparatus for sterilizing the web of packaging material and into an isolation chamber in which the sterilized web of packaging material is maintained and advanced. During advancement of the web of packaging material within the isolation chamber, the web of packaging material is folded and sealed longitudinally to form a tube, the tube being further fed along an (vertical) advancing direction. In order to complete the forming operations, the tube is filled with a pourable product, in particular a pourable food product, and is transversally sealed and subsequently cut along equally spaced transversal cross sections within a pack forming unit of the packaging machine during advancement along the advancing direction. Pillow packs are so obtained. These pillow packs define sealed semi-finalized packs having each a central main body and a plurality of flaps protruding from the central main body. In order to obtain the finalized packages, the pillow packs are further formed, and the flaps are folded and sealed onto the respective central main bodies.

A typical packaging machine of this type comprises:
- a forming apparatus configured to form the semi-finalized packs being filled with the pourable product; and
- a folding apparatus configured to receive the semi-finalized packs from the forming apparatus and to form the finalized packages from the semi-finalized packs.

A typical folding apparatus comprises an infeed conveyor, which is configured to receive the semi-finalized packs from the forming apparatus and to feed the semi-finalized packs to a folding unit of the folding apparatus.

The infeed conveyor comprises a carrier for supporting the semi-finalized packs and a conveyor belt carrying a plurality of pushing elements. The conveyor belt is configured to advance the pushing elements along an advancement path such that the pushing elements direct the semi-finalized packs on the carrier along a feeding path when advancing along an operative portion of the advancement path.

The operation of the infeed conveyor must thereby guarantee a correct feeding of the semi-finalized packs to the folding unit. In other words, the infeed conveyor must guarantee that the advancing semi-finalized packs are synchronized with respect to the folding unit.

As is known the semi-finalized packs formed by the forming apparatus are obtained by forming, transversally sealing, and cutting the tube. Once a semi-finalized pack is cut from the tube, it falls by gravity and may be guided by a slide to the infeed conveyor. As the specific motion profile of each semi-finalized pack may differ with respect to the respective motion profiles of the other semi-finalized packs, the infeed conveyor may also comprise a control device, which provides that the semi-finalized packs are guided onto the carrier so as to allow a synchronized feeding of the semi-finalized packs to the folding unit.

EP-A-2955118 discloses a folding apparatus having an infeed conveyor provided with a control device. The control device comprises a pulley carrying a plurality of pushing elements protruding from the pulley. In use, the pulley rotates around a rotation axis so driving the pushing elements. Moreover, the pushing elements are configured to eventually push one respective semi-finalized pack so as to correctly align the respective semi-finalized pack on the carrier.

Even though the known infeed conveyors work satisfyingly well a desire is felt in the sector to further improve the known infeed conveyors.

### DISCLOSURE OF INVENTION

It is therefore an object of the present invention to provide in a straightforward and low-cost manner an improved infeed conveyor.

It is a further object of the present invention to provide in a straightforward and low-cost manner an improved folding apparatus.

It is an even further object of the present invention to provide in a straightforward and low-cost manner an improved packaging machine.

According to the present invention, there is provided an infeed conveyor according to the independent claim.

Preferred embodiments are claimed in the dependent claims.

According to the present invention, there is also provided a folding apparatus according to claim 13.

According to the present invention, there is also provided a packaging machine according to claim 14 or 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a folding apparatus provided with an infeed conveyor according to the present invention, with parts removed for clarity;
Figure 2 is a lateral view of the infeed conveyor of Figure 1, with parts removed for clarity;
Figure 3 is an enlarged perspective view of a portion of the infeed conveyor of Figure 1, with parts removed for clarity;
Figure 4 is an enlarged perspective view of a detail of the infeed conveyor of Figure 1, with parts removed for clarity;
Figures 5a to 5c show a detail of the infeed conveyor during various steps of operation, with parts removed for clarity;
Figures 6a to 6c are front views, with parts removed for clarity, of the infeed conveyor in various steps of operation, as shown in Figures 5a to 5c;
Figure 7 is an enlarged perspective view of a portion of the detail of Figure 4, with parts removed for clarity; and
Figure 8 is an enlarged perspective view of another portion of the detail of Figure 4, with parts removed for clarity.

### BEST MODES FOR CARRYING OUT THE INVENTION

Number 1 indicates as a whole a packaging machine for producing (sealed) finalized packages of a pourable product, in particular a pourable food product such as pasteurized milk, fruit juice, wine, tomato sauce, etc., from a web of packaging material 3.

Web of packaging material 3 may have a multilayer structure (not shown), and may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines the inner face of the finalized package eventually contacting the pourable product.

According to some possible non-limiting embodiments, web of packaging material 3 may also comprise a layer of gas- and light-barrier material, e.g. aluminum foil, or ethylene vinyl alcohol (EVOH) film, in particular being arranged between one of the layers of the heat-seal plastic material and the layer of fibrous material. Preferentially, web of packaging material 3 may also comprise a further layer of heat-seal plastic material being interposed between the layer of gas- and light-barrier material and the layer of fibrous material.

In more detail, each finalized package may extend along a longitudinal axis and has a longitudinal seam portion (extending along the respective longitudinal axis) and a pair of transversal sealing bands, in particular a top transversal sealing band and a bottom transversal sealing band. In particular, each finalized package may have a substantially parallelepiped structure.

Furthermore, each finalized package may comprise at least two transversal walls (being transversal to the respective longitudinal axis) and being disposed at opposite sides of the finalized package and at least one lateral wall extending between the transversal walls.

More specifically, one respective transversal wall of each finalized package defines a bottom wall, and the other respective transversal wall defines a top wall. In particular, the bottom wall has a support surface adapted to be placed on a (horizontal) plane, such as e.g. a shelf within a distribution point, and the top wall is opposite to the bottom wall.

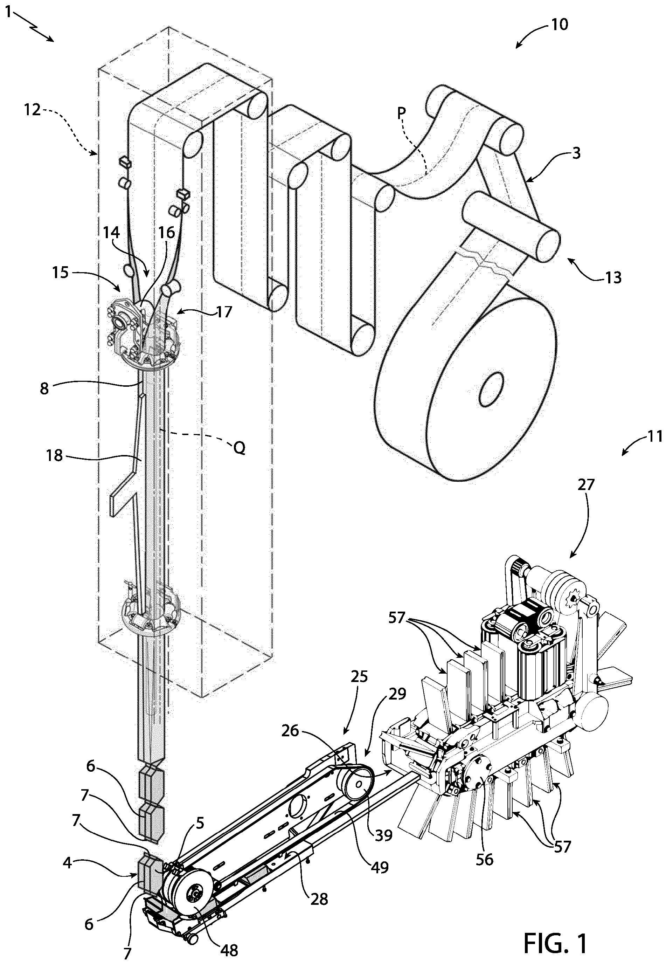

With particular reference to Figure 1, packaging machine 1 may be configured to produce (sealed) semi-finalized packs 4, such as e.g. pillow packs, being filled with the pourable product and to further treat and/or manipulate and/or form semi-finalized packs 4 for obtaining finalized packages. In use, at first semi-finalized packs 4 are produced by packaging machine 1 and then finalized packages are obtained from semi-finalized packs 4 by packaging machine 1.

More specifically, each semi-finalized pack 4 may comprise at least a central main body 5 and a plurality of flaps protruding from central main body 5.

Additionally, each semi-finalized pack 4 may extend along a respective longitudinal axis A and may comprise a longitudinal sealing band 6 (extending along axis A) and two transversal sealing bands 7 disposed at opposite end portions of the respective semi-finalized pack 4.

In particular, each longitudinal sealing band 6 and the respective transversal sealing bands 7 define respectively corresponding longitudinal seam portions and corresponding transversal sealing bands of the respective finalized package (obtained from the respective semi-finalized pack 4).

More specifically, the end portions of each semi-finalized pack 4 may taper from the respective central main body 5 to the respective transversal sealing band 9.

Even more specifically, each end portion has at least two respective flaps, in particular at opposite lateral edges.

With particular reference to Figure 1, packaging machine 1 may comprise at least:
- a forming apparatus 10 configured to form and/or obtain semi-finalized packs 4 of the pourable product; and
- a folding apparatus 11 configured to receive the semi-finalized packs 4 from forming apparatus 10 and to form the finalized packages of the pourable product from semi-finalized packs 4.

In more detail, forming apparatus 10 may comprise:
- an isolation chamber 12 configured to separate an inner (sterile) environment from an outer (hostile) environment;
- a conveying device 13 configured to advance web of packaging material 3 along a web advancement path P at least to a tube forming station at which web of packaging material 3 is formed, in use, into a tube 8 and for advancing tube 8 along a tube advancement path Q;
- a tube forming and sealing device 14 at least partially arranged within isolation chamber 12 and configured to form and longitudinally seal tube 8 at the tube forming station within isolation chamber 12;
- a filling device 15 for filling tube 8 with the pourable product; and
- a pack forming unit configured to at least form and transversally seal tube 8, in particular to also transversally cut tube 8, in particular during advancement of tube 8 along tube advancement path Q, for obtaining and/or producing semi-finalized packs 4.

In particular, the pack forming unit is arranged downstream of isolation chamber 12 and tube forming and sealing device 14 along tube advancement path Q.

Moreover, tube 8 may extend along a longitudinal axis, in particular having a vertical orientation.

Furthermore, packaging machine 1 may further comprise a sterilization apparatus for sterilizing web of packaging material 3 at a sterilization station arranged upstream of the tube forming station along web advancement path P.

In more detail, filling device 15 may comprise at least a filling pipe 16 being in fluid connection or being controllable to be in fluid connection with a pourable product storage tank (not shown and known as such) and being, in use, partially placed within tube 8 for feeding the pourable product into the, in use, advancing tube 8.

More specifically, tube forming and sealing device 14 may comprise at least a tube forming assembly 17 configured to form tube 8 from web of packaging material 3, in particular by overlapping the respective opposite lateral edges of web of packaging material 3, and at least a sealing head 18 configured to longitudinally seal tube 8, in particular along the portion of tube 8 obtained by the overlapping of the opposite lateral edges of web of packaging material 3.

Even more specifically, tube forming assembly 17 and sealing head 18 may be arranged within isolation chamber 12.

According to some preferred non-limiting embodiments, the pack forming unit comprises a plurality of pairs of at least one operative assembly (not shown and known as such) and at least one respective counter-operative assembly (not shown and known as such); and
- a conveying unit (not shown and known as such) configured to advance the operative assemblies and the respective counter-operative assemblies along respective conveying paths.

More specifically, each operative assembly may be configured to cooperate, in use, with the respective counter-operative assembly of the respective pair for forming, transversally sealing, and in particular also transversally cutting, tube 8 for obtaining one respective semi-finalized pack 4, in particular when, in use, advancing along a respective operative portion of the respective conveying path.

With particular reference to Figures 1 to 5, folding apparatus 15 may comprise:
- an infeed conveyor 25 configured to receive the semi-finalized packs 4, in particular from forming apparatus 10, even more particular the pack forming unit, and to feed semi-finalized packs 4 to a transfer station 26; and
- a folding unit 27 configured to receive the semi-finalized packs 4 from infeed conveyor 25 at transfer station 26 and to treat and/or manipulate semi-finalized packs 4 so as to obtain the finalized packages from the semi-finalized packs 4.

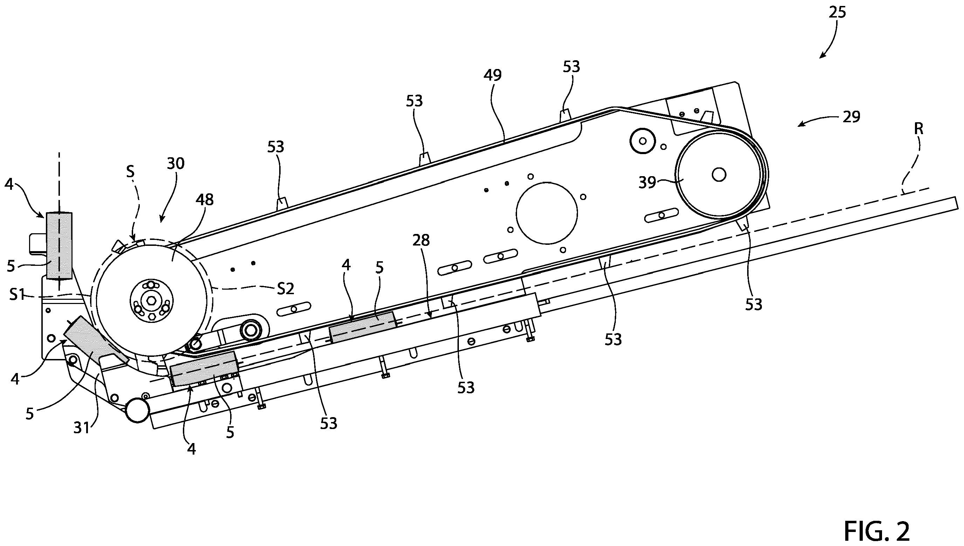

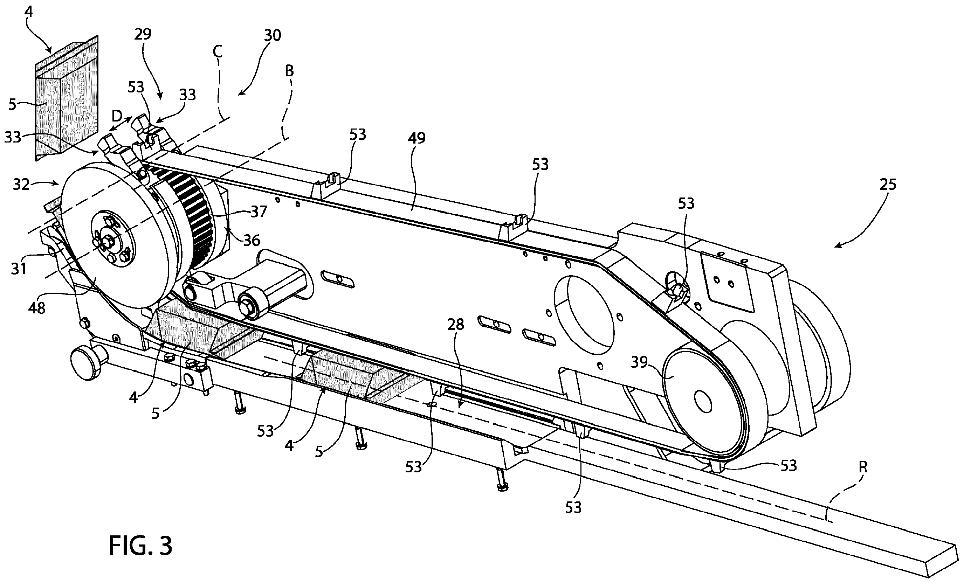

With particular reference to Figures 2 and 3, infeed conveyor 25 comprises:
- a carrier 28 for semi-finalized packs 4;
- a conveying device 29 for advancing semi-finalized packs 4 on carrier 28 and along a feeding path R, in particular to transfer station 26; and
- a control device 30 configured to control transfer of semi-finalized packs 4 onto carrier 28.

Preferentially, infeed conveyor 28 may also comprise a slide 31, in particular a curved slide 31, configured to guide movement of semi-finalized pack 4, in particular prior to being transferred onto carrier 28. Slide 31 may be arranged upstream of carrier 28 with respect to an advancement path of semi-finalized packs 4. Preferentially, slide 31 may be interposed between forming apparatus 10, in particular pack forming unit, and carrier 28 and/or may be connected to carrier 28.

In particular, control device 30 is configured to control transfer of semi-finalized packs 4 onto carrier 28 such to guarantee a correct placement and/or alignment of semi-finalized packs 4 onto carrier 28.

As will be clearer from the further description, control device 30 may be configured such that control device 30 only interacts with those semi-finalized packs 4 that need a correction in their motion profile as otherwise such semi-finalized packs 4 may be wrongly aligned and/or placed on carrier 28.

It should be noted that a wrong alignment and/or placement must be avoided as otherwise advancement of the respective semi-finalized packs 4 would not be synchronized with operation of folding unit 27.

It may also happen that in the case of a misalignment and/or misplacement of semi-finalized packs 4, such semi-finalized packs 4 may interfere in an undesired manner with portions of conveying device 29.

Overall, control device 30 may be configured to guarantee a desired synchronization of semi-finalized packs 4 with respect to operation of folding unit 27.

In more detail and with particular reference to Figures 2 to 6c, control device 30 comprises:
- a support structure 32;
- one or more control elements 33 coupled to and protruding from at least a portion 36 of support structure 32;
- a drive assembly 34 configured to advance, in particular cyclically advance, the one or more control elements 33 along a conveying path S, in particular an endless conveying path S, by advancing, in particular rotating at least portion 36 of support structure 32; and
- an actuation assembly 35 configured to selectively control a relative position of each control element 33 with respect to portion 36 of support structure 32.

In more detail and with particular reference to Figures 2 to 4, support structure 32 may comprise, in particular portion 36 may comprise and/or may be defined by, a pulley 37 movably carrying the one or more control elements 33 and being rotatable about a rotation axis B.

In particular, drive assembly 34 is configured to rotate pulley 37 around rotation axis B for advancing control elements 33 along conveying path S, in particular circular conveying path S.

Preferentially, actuation assembly 35 may be configured to selectively control the relative position of each control element 33 with respect to support structure 32, in particular pulley 37, in dependence of the location of each control element 33 along conveying path S.

Even more preferentially, actuation assembly 35 may be configured to selectively control the relative position of each control element 33 with respect to support structure 32, in particular pulley 37, in dependence of the angular position of the respective control element 33 with respect to rotation axis B.

More specifically, conveying path S may comprise an operative portion S1 and a return portion S2 for guiding control elements 33 back to operative portion S1. In particular, when advancing along operative portion S1 control elements 33 may face slide 31 or carrier 28.

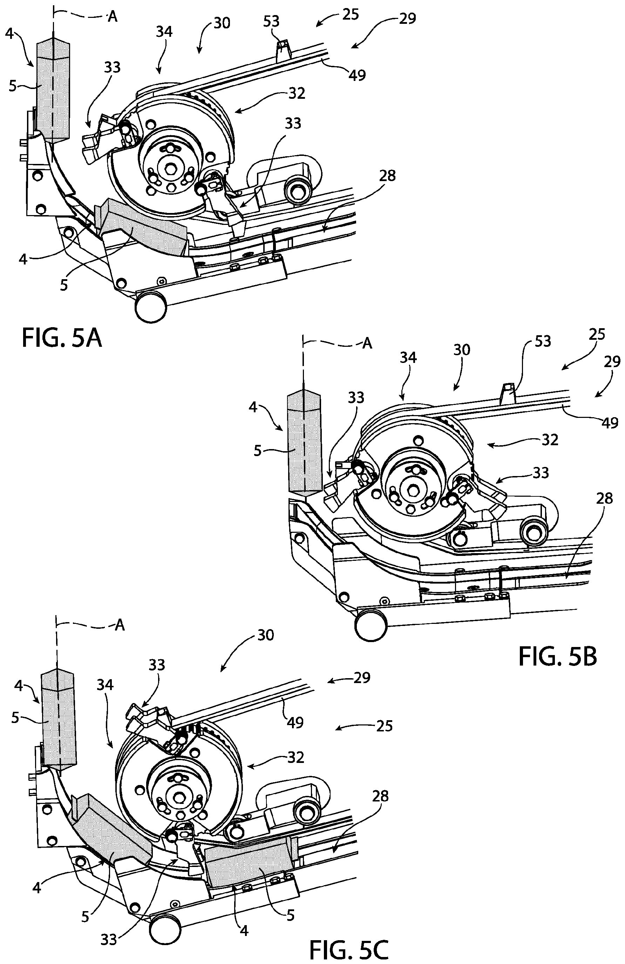

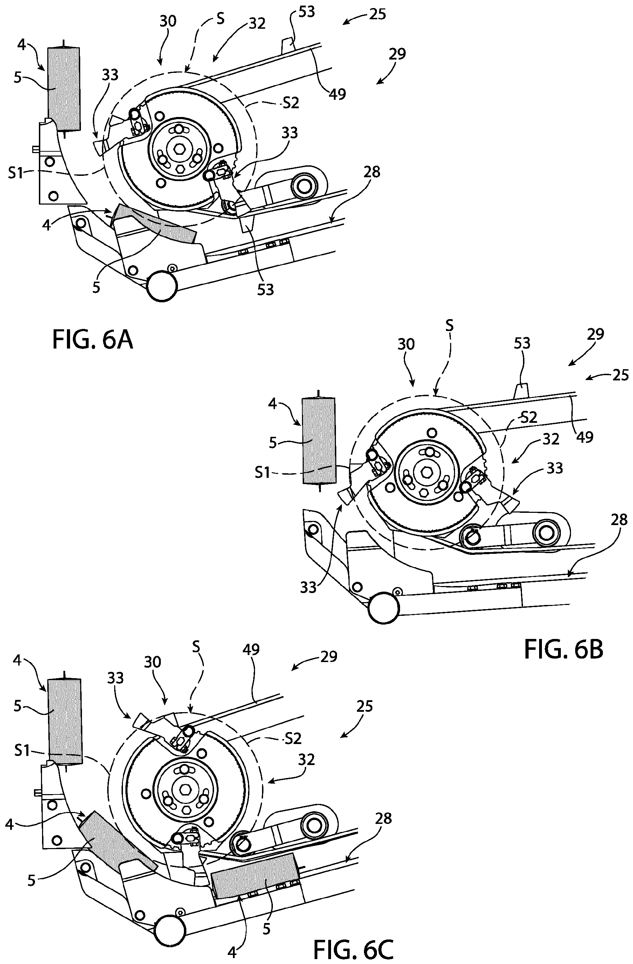

Advantageously, actuation assembly 35 may be configured to selectively control the relative position of each control element 33 with respect to support structure 32, in particular pulley 37, such that:
- control elements 33 when advancing, in use, along a first section of operative portion S1 are placed such not to interfere with any semi-finalized pack 4 (see Figures 5a and 6a); in particular, control elements 33, when advancing, in use, along the first section of operative portion S1 are (substantially) retracted from semi-finalized pack 4; and
- control elements 33 when advancing, in use, along a second section of operative portion S1, arranged downstream of the first section, are interposed between one semi-finalized pack 4 and the successive semi-finalized pack 4.

Moreover, actuation assembly 35 may be configured to selectively control the relative position of each control element 33 with respect to support structure 32, in particular pulley 37, such to retract control elements 33 from semi-finalized packs 4 when advancing along a third section of operative portion S1, arranged downstream of the second section.

Additionally, in use, after advancement along the third section, control elements 33 advance along return portion S2.

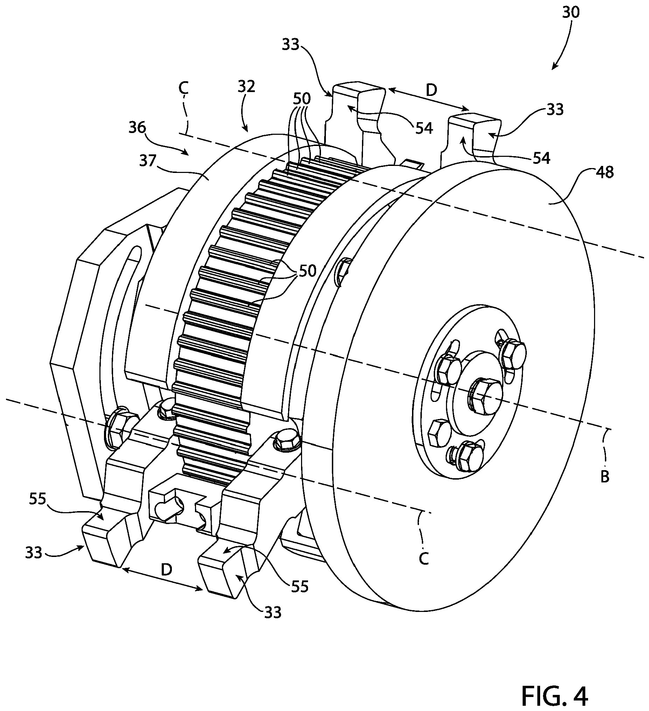

With particular reference to Figures 4 to 6c, each control element 33 may be angularly movable with respect to support structure 32, in particular pulley 37, and around a respective auxiliary rotation axis C, in particular parallel but not coaxial to rotation axis B.

In particular, actuation assembly 35 may be configured to angularly and selectively move each control element 33 for controlling the relative position of the respective control element 33 with respect to support structure 32, in particular pulley 37.

In further detail, each control element 33 may be movably connected to pulley 37 at a respective lateral side of pulley 37.

In particular, each lateral side of pulley 37 may carry at least two control elements 33.

Moreover, the control elements 33 being connected to the same lateral side are equally spaced from one another.

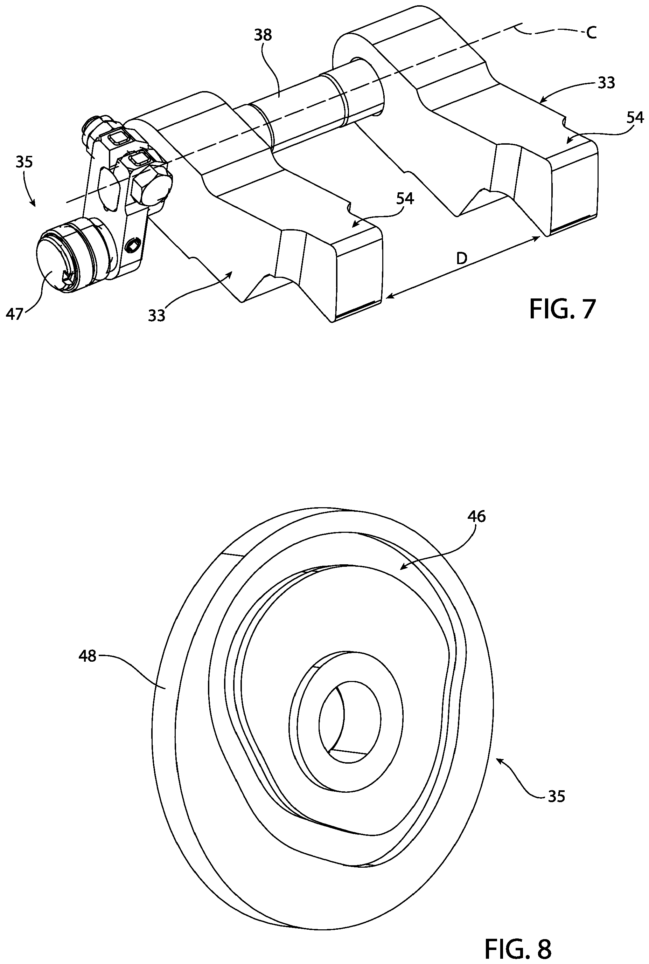

With particular reference to Figures 4 and 8, control device 30 may comprise at least one pair of control elements 33, in the specific case shown two pairs of control elements 33. Each pair of control elements 33 may comprise two respective control elements 33 spaced apart from one another along a direction D transversal to conveying path S and/or parallel to rotation axis B.

In particular, the control elements 33 of each pair may be connected to one another by means of a respective coupling bar 38.

Advantageously, actuation assembly 35 may be configured to simultaneously apply the same motion profile to the respective control elements 33 of each pair of control elements 33.

With particular reference to Figures 4, 8 and 9, actuation assembly 35 may comprise a cam mechanism for selectively controlling the position of each control element 33, in particular so as to selectively control a respective angular position with respect to the respective auxiliary rotation axis C.

More specifically, the cam mechanism may comprise a cam profile 46 and one or more cam followers 47. Each cam follower 47 may be coupled to, in particular connected to, one respective control element 33, in particular to one respective control element 33 of a respective pair of control elements 33.

In use, any change of the respective angular position of the control element 33 being connected to one respective cam follower 47 results also in change of the respective angular position of the other control element 33 of the respective pair of control elements 33 as a consequence of the presence of coupling bar 38.

According to the specific example shown, pulley 37 may comprise a cover 48 coupled to one respective lateral side of pulley 37. Cover 48 may carry cam profile 46.

Alternatively, cam profile 46 may be carried by inner portions of pulley 37.

With particular reference to Figures 2, 3 and 5a to 5c, drive assembly 34 may comprise a conveyor belt 49 configured to advance along an endless belt advancement path.

Additionally, also conveying device 29 may comprises a respective conveyor belt, in particular as shown in the specific embodiment the conveyor belt of conveying device 29 may coincide with conveyor belt 49.

Moreover, conveyor belt 49 may be coupled to pulley 37, in particular by means of a plurality of tooth elements 50 provided on pulley 37 and conveyor belt 49, in such a manner that rotation of pulley 37 around rotation axis B results, in use, in an advancement of the conveyor belt 49 along the belt advancement path.

Moreover, drive assembly 34 and/or conveying device 29 may comprise an auxiliary pulley 39 spaced apart from pulley 37. Conveyor belt 49 may also be coupled to auxiliary pulley 39.

In particular, auxiliary pulley 39 may be arranged closer to transfer station 26 than pulley 37.

Advantageously, drive assembly 34 and/or conveying device 29 may comprise an actuator, such as an electrical motor, operatively coupled to and configured to rotate, in use, one of pulley 37 and auxiliary pulley 39, so as to actuate advancement of conveyor belt 49 along the belt advancement path.

Advantageously, drive assembly 34 and/or conveying device 29 may also comprise a tensioning group (not shown) configured to tension conveyor belt 49.

Reverting again to Figures 2, 3 and 5a to 5c, conveying device 29 may comprise a plurality of pushing elements 53 fixed to, and in particular protruding from, the conveyor belt of conveying device 29, in particular conveyor belt 49. Each pushing element 53 may be configured to engage one respective semi-finalized pack 4 and to guide the semi-finalized pack 4 on carrier 28 along the feeding path R, in particular to transfer station 26.

In particular, pushing elements 53 may be equally spaced along the conveyor belt, in particular conveyor belt 49.

Preferentially, each pushing element 53 may face carrier 28 when contacting, in use, the respective semi-finalized pack 4.

According to some preferred non-limiting embodiments, each control element 33 may comprise a pushing surface 54 configured to push at least one semi-finalized pack 4 at a time so as to align the respective semi-finalized pack with respect to one respective pushing element 53.

It should be noted that during operation, it is not always needed that control element 33 pushes, by means of pushing surface 54, a respective semi-finalized pack 4. This becomes only necessary, if the respective semi-finalized pack 4 is not correctly aligned and/or placed on carrier 28. However, after having been pushed by means of pushing surface 54 the respective semi-finalized pack 4 is correctly aligned and/or positioned on carrier 28.

In further detail, each pushing surface 54 is configured to interact with a respective semi-finalized pack 4 advancing in front of the respective control element 33.

In particular, in use, the pushing by means of pushing surface 54 occurs if semi-finalized packs 4 are "in delay".

Alternatively or in addition, each control element 33 may also comprise an abutment surface 55 configured to receive a respective semi-finalized pack 4 at a time and to control transfer of the semi-finalized pack 4 onto the carrier 28.

In particular, each abutment surface 55 is configured to slow down advancement of the respective semi-finalized pack 4. Even more particular, each abutment surface 55 may, in use, be engaged by the respective semi-finalized pack 4 if the respective semi-finalized pack 4 advances to quickly and needs to be delayed.

Moreover, each abutment surface 55 may be engaged by a respective semi-finalized pack 4 advancing behind the respective control element 33.

In further detail, each pushing surface 54 may be arranged downstream of the respective abutment surface 55 with respect to conveying path S.

According to some preferred non-limiting embodiments, each pushing surface 54 may contact a respective semi-finalized pack 4 and/or each abutment surface 55 may be engaged by a respective semi-finalized pack 4 when the respective control element 33 advances along the second section of operative portion S1.

Advantageously, each control element 33 is aligned with respect to one respective pushing element 53 when advancing along operative portion S1.

More specifically, actuation assembly 35 may be configured to control control elements 33 such that control elements 33 are not parallel to the respective pushing element 53 when advancing along the first section of operative portion S1 and/or the third section of operative portion S1 and/or are (substantially) parallel to the respective pushing element 53 when advancing along the second section of operative section S1.

With particular reference to Figure 1, folding unit 27 may be configured to manipulate and/or process semi-finalized packs 4 such so as to form and/or shape at least the respective central main bodies 5 (into the desired form and/or shape of the respective finalized package) and to control and/or determine the relative position of the flaps with respect to the respective central main body 5.

Preferentially, folding unit 27 may be configured to seal each flap onto the respective central main body 5.

In more detail, folding unit 27 may comprise at least:
- a conveying assembly 56 configured to advance semi-finalized packs 4 along a final advancement path; and
- at least one treatment unit configured to form and/or shape each central main body and/or for folding and sealing the flaps onto the respective central main body 5 during the advancement of semi-finalized packs 4 along the final advancement path.

More specifically, conveying assembly 56 may comprise a plurality of retaining pockets 57 configured to retain at least one respective semi-finalized pack 4 during advancement of the respective semi-finalized pack 4 along the final advancement path.

In use, packaging machine 1 forms finalized packages filled with the pourable product.

In particular, the method of forming the finalized packages comprises the main steps of:
- forming semi-finalized packs 4 by means of forming apparatus 10; and
- folding semi-finalized packs 4 into the finalized packages by operation of folding apparatus 11.

In more detail, the main step of forming semi-finalized packs 4, comprises at least the steps of:
- advancing web of packaging material 3 along advancement path P, in particular by operation of conveying device 13;
- folding web of packaging material 3, in particular within isolation chamber 12, into tube 8 by means of tube forming and sealing device 14, in particular tube forming assembly 23;
- longitudinally sealing tube 8, in particular within isolation chamber 12, by operation of tube forming and sealing device 14, in particular sealing head 24;
- filling tube 8 with the pourable product by operation of filling device 15, in particular by directing the pourable product into tube 8 through filling pipe 16;
- advancing tube 8 along tube advancement path Q by operation of conveying device 13; and
- obtaining semi-finalized packs 4 from tube 8 by forming, transversally sealing, and transversally cutting tube 8 by operation of the pack forming unit and during advancement of tube 8 along tube advancement path Q.

Moreover, the step of forming may also comprise the step of sterilizing web of packaging material 3 at the sterilization station.

In more detail, the step of folding semi-finalized packs 4 comprises the sub-steps of:
- feeding semi-finalized packs 4 to folding unit 27 by operation of infeed conveyor 25; and
- final folding semi-finalized packs 4 by operation of folding unit 27.

More specifically, during the sub-step of feeding conveying device 29 advances semi-finalized packs 4 on carrier 28 and along feeding path R, in particular to transfer station 26. In particular, pushing elements 53 push semi-finalized packs 4 along carrier 28 and feeding path R.

Moreover, during the sub-step of feeding, control device 30 ensures that semi-finalized packs 4 are transferred onto carrier 28 in a controlled and desired manner. In particular, control device 30 ensures that advancement of semi-finalized packs 4 are delayed and/or decelerated in order that semi-finalized packs 4 are correctly transferred onto carrier 28 with respect to the respective pushing element 53.

More specifically, during operation of control device 30 the relative position of control elements 33 with respect to support structure 32, in particular pulley 37, is controlled in dependence of the position of control elements 33 along conveying path S, in particular in dependence of their angular position with respect to rotation axis B.

Even more specifically, the angular position of control elements 33 with respect to the respective auxiliary rotation axis C is controlled, in particular in dependence of the respective angular position with respect to rotation axis B.

While each abutment surface 55 guarantees that semi-finalized packs 4 do not advance to quickly, each pushing surface 54 ensures the correct alignment of semi-finalized packs 4 with respect to the respective pushing elements 53.

Advantageously, actuation assembly 35 controls the relative position of each control element 33 with respect to support structure 32, in particular pulley 37, such that:
- control elements 33 when advancing, in use, along the first section of operative portion S1 are placed such not to interfere with any semi-finalized pack 4 (see Figures 5a and 6a); in particular, control elements 33, when advancing, in use, along the first section of operative portion S1 are (substantially) retracted from semi-finalized pack 4; and
- control elements 33 when advancing, in use, along the second section of operative portion S1, arranged downstream of the first section, are interposed between one semi-finalized pack 4 and the successive semi-finalized pack 4.

Moreover, actuation assembly 35 may control the relative position of each control element 33 with respect to support structure 32, in particular pulley 37, such to retract control elements 33 from semi-finalized packs 4 when advancing along the third section of operative portion S1.

Additionally, in use, after advancement along the third section, control elements 33 advance along return portion S2.

In more detail, during the step of final folding, the respective central main bodies 5 are formed and/or the respective flaps are folded and sealed onto the respective central main bodies 5 so as to form the finalized packages from semi-finalized packs 4.

More specifically, during the step of final folding, semi-finalized packs 4 advance along the final advancement path (by means of operation of conveying assembly 56) and are treated during advancement along the final advancement path (by operation of the treatment unit) for obtaining the finalized packages. In particular, the treatment unit forms and/or shapes the respective central main bodies 5 and/or folds and seals the respective flaps onto the respective central main bodies 5.

Furthermore, during the step of final folding, semi-finalized packs 4 are inserted into retaining pockets 57 at transfer station 26.

The advantages of infeed conveyor 25 according to the present invention will be clear from the foregoing description.

In particular, by having the possibility to modify the relative position of control elements 33 with respect to support structure 32, it is possible to operate at higher production speeds in comparison with respect to the known infeed conveyors. 25, in which one must obtain a correct alignment of control elements 33 between two semi-finalized packs 4 and, at the same time, one needs to avoid that control elements 33 may impact in an undesired manner with semi-finalized packs 4.

As control elements 33 can change their relative positions with respect to support structure 32, one can avoid an undesired impact when control elements 33 advance along the first section. This possibility is not given in the state-of-art infeed conveyors.

Clearly, changes may be made to packaging machine 1 and/or folding apparatus 11 and/or infeed conveyor 25 as described herein without, however, departing from the scope of protection as defined in the accompanying claims.

## Claims

1. - Infeed conveyor (25) for a folding apparatus (11) for folding semi-finalized packs (4) containing a pourable product, the infeed conveyor (25) being configured to receive the semi-finalized packs (4) and to transfer the semi-finalized packs (4) to a folding unit (27) of the folding apparatus (11);
the infeed conveyor (25) comprises at least:
- a carrier (28) for the semi-finalized packs (4);
- a conveying device (29) for advancing the semi-finalized packs (4) on the carrier (28) and along a feeding path (R); and
- a control device (30) configured to control transfer of the semi-finalized packs (4) onto the carrier (28) ;
wherein the control device (30) comprises:
- a support structure (32);
- one or more control elements (33) coupled to and protruding from the support structure (32); and
- a drive assembly (34) configured to advance the one or more control elements (33) along a conveying path (S) by driving the support structure (32);
wherein the control device (30) further comprises an actuation assembly (35) configured to selectively control a relative position of each control element (33) with respect to the support structure (32).

2. - Infeed conveyor according to claim 1, wherein the actuation assembly (35) is configured to selectively control the relative position of each control element (33) with respect the support structure (32) in dependence of the location of each control element (33) along the conveying path (S).

3. - Infeed conveyor according to claim 2, wherein the drive assembly (29) is configured to rotate at least a portion (36) of the support structure (32) around a rotation axis (B) for rotating the control elements (33) around the rotation axis (B) and for advancing the control elements (33) along the conveying path (S);
wherein the actuation assembly (35) is configured to selectively control the relative position of each control element (33) with respect to the support structure (32) in dependence of the angular position of each control element (32) with respect to the rotation axis (B).

4. - Infeed conveyor according to any one of the preceding claims, wherein each one of the one or more control elements (33) is angularly movable with respect to the support structure (32) and around a respective auxiliary rotation axis (C);
wherein the actuation assembly (35) is configured to angularly move each control element (33) for controlling the relative position of the respective control element (33) with respect to the support structure (32).

5. - Infeed conveyor according to any one of the preceding claims, wherein the actuation assembly (35) comprises a cam mechanism for selectively controlling the position of each control element (33).

6. - Infeed conveyor according to claim 5, wherein the cam mechanism (45) comprises a cam profile (46) and one or more cam followers (47);
wherein each cam follower (47) is coupled to one respective control element (33).

7. - Infeed conveyor according to any one of the preceding claims, wherein the support structure (32) comprises a pulley (37) movably carrying the one or more control elements (33) and being rotatable about a rotation axis (B).

8. - Infeed conveyor according to claim 7, wherein the drive assembly (34) comprises a conveyor belt (49) configured to advance along a conveyor belt advancement path;
wherein the conveyor belt (47) is coupled to the pulley (36) in such a manner that rotation of the pulley (36) around the rotation axis (B) results, in use, in an advancement of the conveyor belt (49) along the conveyor belt advancement path.

9. - Infeed conveyor according to claim 8, wherein the conveying device (29) comprises a plurality of pushing elements (53) fixed to the conveyor belt;
wherein each pushing element (53) is configured to engage, in use, one respective semi-finalized pack (4) and to guide the respective semi-finalized pack (4) on the carrier (28) along the feeding path (R).

10. - Infeed conveyor according to any one of the preceding claims, wherein the conveying device (29) comprises a plurality of pushing elements (53), each one configured to engage, in use, one respective semi-finalized pack (4) and to guide the respective semi-finalized pack (4) on the carrier (28) and along the feeding path (R);
wherein each control element (33) comprises a pushing surface (54) configured to push at least one semi-finalized pack (4) at a time so as to align the semi-finalized pack (4) with respect to one respective pushing element (34).

11. - Infeed conveyor according to any one of the preceding claims, wherein the conveying device (29) comprises a plurality of pushing elements (53), each one configured to engage, in use, one respective semi-finalized pack (4) and to guide the respective semi-finalized pack (4) on the carrier (28) and along the feeding path (R);
wherein each control element (33) comprises an abutment surface (55) configured to receive a respective semi-finalized pack (4) at a time and to control transfer of the semi-finalized pack (4) onto the carrier (28).

12. - Infeed conveyor according any one of the preceding claims, wherein the control device (30) comprises at least one pair of control elements (33);
wherein each pair of control elements (33) comprises two control elements (33) spaced apart from one another along a direction (D) transversal to the conveying path (S) ;
wherein the actuation assembly (35) is configured to simultaneously apply the same motion profile to the respective control elements (33) of each pair of control elements (33).

13. - Folding apparatus (11) for folding finalized packages from semi-finalized packs (4) filled with a pourable product comprising at least:
- an infeed conveyor (25) according to any one of the preceding claims; and
- a folding unit (27) configured to receive the semi-finalized packs (4) from the infeed conveyor (25) and to treat and/or manipulate the semi-finalized packs (4) so as to obtain the finalized packages from the semi-finalized packs (4).

14. - Packaging machine (1) for producing finalized packages of a pourable product comprising at least:
- a forming apparatus (10) configured to form semi-finalized packs (4) of the pourable product; and
- a folding apparatus (11) according to claim 13 for forming the finalized packages from the semi-finalized packs (4).

15. - Packaging machine according to claim 14, wherein the forming apparatus (10) comprises:
- an isolation chamber (12) configured to separate an inner environment from an outer environment;
- a conveying device (13) configured to advance a web of packaging material (3) along a web advancement path (P) at least to a tube forming station at which the web of packaging material (3) is formed, in use, into a tube (8) and for advancing the tube (8) along a tube advancement path (Q);
- a tube forming and sealing device (14) at least partially arranged within the isolation chamber (12) and configured to form and longitudinally seal the tube (8) at the tube forming station within the isolation chamber (12) ;
- a filling device (15) for filling the tube (8) with the pourable product; and
- a pack forming unit configured to form and transversally seal and cut the tube (8) for obtaining and/or producing the semi-finalized packs (4).
